# EUROPÄISCHE PATENTSCHRIFT

(11) **EP 0 737 635 B1**
(45) Veröffentlichungstag und Bekanntmachung des Hinweises auf die Patenterteilung: **01.12.1999**
(21) Anmeldenummer: 96105778.3
(22) Anmeldetag: 12.04.1996
(51) Int. Cl.: B65H 3/08, B65H 3/12

(54) **Verfahren und Vorrichtung zur Vereinzelung gestapelter Flächengebilde sowie deren Verwendung bei der Verpackung von Zigaretten**
Method and apparatus for the separation of stacked flat products and the use of the apparatus in the packaging of cigarettes
Méthode et appareil pour la séparation de structures planes empilées et l'utilisation de cet appareil dans l'emballage de cigarettes

(30) Priorität: 12.04.1995 DE 19513953
(43) Veröffentlichungstag der Anmeldung: 16.10.1996
(73) Patentinhaber: FABRIQUES DE TABAC REUNIES S.A., 2003 Neuchâtel-Serrières (CH)
(72) Erfinder: Furmanski, Horst, 10829 Berlin (DE); Gehrke, Ehrhard, 12107 Berlin (DE); Maheronnaghch, Kamal, 13437 Berlin (DE)
(74) Vertreter: Abitz, Walter, Dr.-Ing.

(56) Entgegenhaltungen:
- EP-A- 0 082 475
- DE-A- 2 429 427
- GB-A- 2 071 061
- US-A- 3 782 716

## Beschreibung

Die Erfindung betrifft eine Vorrichtung zur Vereinzelung gestapelter Flächengebilde aus einem Flächengebildestapel, wobei das unterste Flächengebilde des Flächengebildestapels durch Unterdruck von einer Transporteinrichtung festgehalten und abgezogen wird.

Für die verschiedensten Herstellungsverfahren und Verwendungen werden Flächengebilde, z.B. Bögen- oder Blattzuschnitte, benötigt, die vor der Verarbeitung in gestapelter Form bereitgestellt werden. Zur weiteren Verarbeitung müssen die gestapelten Bögen und Blätter vereinzelt werden, d.h. es muß automatisch ein einzelner Bogen oben oder unten von dem Stapel abgenommen und seiner weiteren Verarbeitung zugeführt werden.

Aus der US-A-3 782 716 sind ein Verfahren und eine Vorrichtung zur Vereinzelung gestapelter Flächengebilde aus einem Flächengebildestapel bekannt, wobei das unterste Flächengebilde durch Unterdruck von einer Transporteinrichtung festgehalten, abgezogen und zuerst an mindestens einem seiner parallel zur Abziehrichtung verlaufenden Randbereiche durch Unterdruck nach unten vom Rest des Stapels abgelöst wird, bevor es abgezogen wird. Die Vorderkante des vereinzelten Flächengebildes kommt dabei genau auf der Vorderkante der Transporteinrichtung zu liegen.

Weiterhin ist eine Vorrichtung der Firma Sasib, Bologna, Italien bekannt, bei der die gestapelten Bögen oder Blätter auf einem höhenverstellbaren Messer und auf einem rotierenden Gummisegment aufliegen. Diese gestapelten Blätter werden in Transportrichtung von einem Abstreifer und auf der Gegenseite von einem Gegenhalter fixiert. Durch das rotierende Gummisegment wird das unterste Blatt aufgenommen und über ein keilförmiges Zwischenstück an eine Übergaberolle abgegeben, die das Blatt schließlich einem Förderband mit Mitnehmern zuführt. Problematisch bei dieser Vorrichtung ist, daß der Abstreifer genau eingestellt werden muß. Ist der Abstand zwischen dem Abstreifer und dem keilförmigen Zwischenstück zu groß, wird nicht nur das unterste Blatt durch die rotierende Gummiwalze mitgenommen, sondern zwei oder mehr Blätter. Ist andererseits der Abstand zu klein, so gibt es einen Stau. Auch bei einem nicht ganz geraden Bogen kann es zu einem Stau kommen. Es ist offensichtlich, daß gerade bei dünnen Bögen oder Blättern diese Vorrichtung nur unzureichend arbeitet, da der Abstreifer nur schwer so exakt einzustellen ist, daß ein Stau bzw. die Übergabe von mehr als einem Blatt an die Übergaberolle vermieden werden kann. Ein generelles Problem bei dieser Vorrichtung ist auch, daß keine Trennung der Blätter vor der Übergabe erfolgt, so daß die Tendenz besteht, daß mehr als ein Blatt durch das rotierende Gummisegment abgeführt wird, was auch bei exakt eingestelltem Abstreifer zu einem Stau führt.

Weiterhin ist aus der DE-A-36 34 489 ein Verfahren und eine Vorrichtung zur Vereinzelung von Kupons bekannt, wobei der unterste Kupon von zwei Saugnäpfen, die mit einer Unterdruckquelle verbunden sind, abgezogen und auf ein Förderband zur weiteren Verwendung abgelegt wird. Dieses Verfahren erfordert einen hohen apparativen Aufwand und birgt wiederum die Gefahr, daß mehr als ein Kupon an das Förderband übergeben wird, da leicht außer dem untersten, angesaugten Kupon aufgrund der Schwerkraft auch der darüberliegende Kupon aus dem Stapel entfernt wird.

Aus der DE-A-41 33 404 ist die Vereinzelung von Banderolen und Marken für Zigarettenpackungen bekannt. Hierzu wird eine Vereinzelungseinrichtung beschrieben, die einen um eine Schwenkachse konzentrischen Zylinderflächenabschnitt aufweist, der an seiner Vorderseite abgeflacht ist und damit eine ebene Fläche bildet, die an der Unterseite des Banderolenstapels anliegt. In dem Zylinderflächenabschnitt befinden sich Öffnungen, die mit einer Unterdruckquelle verbunden sind, so daß die unterste Banderole durch Unterdruck festgehalten und bei der Drehung der Vereinzelungseinrichtung um die Schwenkachse vom Stapel abgezogen wird. Auch hier besteht wiederum die Gefahr, daß durch Reibungskräfte auch die darüberliegende Banderole mitabgezogen wird.

Aufgabe der vorliegenden Erfindung ist es daher, eine Vorrichtung zur Verfügung zu stellen, die ein problemloses Vereinzeln und einen erleichterten Weitertransport des vereinzelten Flächengebildes ermöglicht.

Diese Aufgabe wird erfindungsgemäß gelöst durch eine Vorrichtung zur Vereinzelung gestapelter Flächengebilde mit einer Aufnahmeeinrichtung für einen Flächegebildestapel (11) und mit einer Transporteinrichtung für die vereinzelten Flächengebilde (10), wobei ein in die Aufnahmeeinrichtung eingelegter Flächengebildestapel (11) auf der Transporteinrichtung aufliegt und die Transporteinrichtung Öffnungen (14) aufweist, die mit einer Einrichtung zur Erzeugung von Unterdruck verbindbar sind, und wobei die Transporteinrichtung ein Transportschlitten (15) mit einem ebenen Mittelbereich (16) und parallel zur Transportrichtung verlaufenden Seitenbereichen (17) ist, wobei mindestens einer der Seitenbereiche (17) nach unten abfällt und dieser nach unten abfallende Seitenbereich (17) mindestens eine dieser vorgenannten Öffnungen (14) aufweist, die mit der Einrichtung zur Erzeugung von Unterdruck verbindbar ist, und wobei die Vorrichtung weiterhin einen Abstreifer (13) aufweist, wobei die Länge des Transportschlittens (15) so bemessen ist, daß die Vorderkante des Transportschlittens (15), wenn dieser sich in einer, bezüglich der Transportrichtung, zurückgezogenen Position befindet, nicht ganz bis zur Hinterkante der Vorderwand der Aufnahmeeinrichtung reicht, so daß ein auf dem Transportschlitten (15) fixiertes Flächengebilde (10) etwas, vorzugsweise 0,5 - 3 mm, über die Vorderkante des Transportschlittens (15) übersteht. Hierdurch wird die Übergabe des fixierten Flächengebildes nach dem Ausschub an eine weitere Transporteinrichtung erleichtert. Weitere Maßnahmen zur Erleichterung der Übergabe des auf dem Transportschlitten befindlichen Flächengebildes sind eine Anschrägung der Vorderkantenunterseite des Transportschlittens sowie dessen Neigung nach vorne, beispielsweise mit einen Winkel von 20 bis 50° gegenüber der Waagerechten. (Der Schlitten kann selbstverständlich auch waagrecht oder auch nach hinten geneigt sein.) Die Übergabe kann auch durch eine Anpassung der Vorderseite des Transportschlittens an die Einrichtung, die das vereinzelte Flächengebilde weiterleitet, bewirkt werden. Ist diese weitere Transporteinrichtung beispielsweise eine Übergaberolle so kann eine entsprechende Aussparung, beispielsweise in der Mitte der Vorderseite des Transportschlittens vorgesehen sein.

Mit Hilfe der erfindungsgemäßen Vorrichtung erfolgt die Vereinzelung der Flächengebilde zunächst dadurch, daß das unterste Flächengebilde zuerst an mindestens einem seiner parallel zur Abziehrichtung verlaufenden Randbereiche durch Vakuum oder Unterdruck nach unten von dem Rest des Flächengebildestapels abgelöst wird, bevor es abgezogen wird.

Durch die teilweise Ablösung des untersten Flächengebildes von den darüberliegenden Flächengebilden wird ein eventuelles Anhaften des untersten Flächengebildes an dem Stapel beseitigt, so daß nicht mehr die Gefahr besteht, daß zusammen mit dem untersten Flächengebilde auch darüberliegende Flächengebilde abgeführt werden.

Vorzugsweise wird das unterste Flächengebilde durch Unterdruck um eine in Abziehrichtung verlaufende Linie abgeknickt oder gebogen, da hierdurch eine gute teilweise Ablösung von den darüberliegenden Flächengebilden erfolgt.

Vorzugsweise werden beide Randbereiche nach unten abgelöst und das unterste Flächengebilde unter einem Abstreifer hindurch abgezogen, wodurch eine bessere Stabilisierung und damit Haftsicherheit beim Abziehen des Flächengebildes erreicht wird.

Bei den verwendeten Flächengebilden kann es sich um beliebige Flächengebilde handeln, wobei jedoch deren Randbereiche biegbar sein müssen. Beispiele für einsetzbare Flächengebilde sind Papierzuschnitte (z.B. Kupons, Inserts, Banderolen, Marken), Kartonzuschnitte sowie Kunststoffzuschnitte (z.B. aus Polyvinylchlorid oder einem weichmacherfreien Vinylchlorid-Vinylacetat-Copolymer). Vorzugsweise kann ein Flächengebilde aus Kunststoff eine flexible Karte (weiß oder gefärbt und gegebenenfalls mit den üblichen Merkmalen einer Scheckkarte wie Magnetstreifen oder Beschriftungsfeld) in der Form einer üblichen Scheckkarte mit einer Größe sein, die gleich der oder kleiner oder größer als die Größe einer üblichen Scheckkarte ist.

Die Vorrichtung zur Durchführung des Vereinzelungs-Verfahrens besteht aus einer Aufnahmeeinrichtung für den Flächengebildestapel und aus einem unter der Aufnahmeeinrichtung verschiebbar gelagerten Transportschlitten für die vereinzelten Flächengebilde, so daß ein in die Aufnahmeeinrichtung eingelegter Flächengebildestapel auf dem Transportschlitten aufliegt.

Die Aufnahmeeinrichtung kann beispielsweise ein Magazinschacht sein, der in Transportrichtung eine Vorderseite und auf der Gegenseite einen höhen- und längs der Transportrichtung verstellbaren Gegenhalter aufweist. Der Gegenhalter sollte unter die Unterkante des Flächengebildestapels reichen, um den Ausschub eines Flächengebildes nach hinten bei der Rückwärtsbewegung des Schlittens zu vermeiden.

Die Oberseite des Transportschlittens hat einen ebenen Mittelbereich (der durchgehend sein kann oder aus zwei oder mehr einzelnen Bereichen bestehen kann) und parallel zur Transportrichtung verlaufende Seitenbereiche, wobei mindestens einer der Seitenbereiche nach unten abfällt. Vorzugsweise fallen jedoch beide Seitenbereiche nach unten ab und sind abgeknickt (vorzugsweise mit einem Winkel von 5 - 10°, je nach Materialsteifigkeit, gegenüber der Ebene des Mittelbereichs) oder abgerundet, was eine gute Fixierung des Flächengebildes auf dem Transportschlitten erlaubt. Die Breite des Transportschlittens entspricht in etwa der Breite des jeweiligen Flächengebildes. Die Länge des Transportschlittens ist in etwa gleich der Länge des Flächengebildes plus die beim Ausschub zurückgelegte Wegstrecke. Auf diese Weise wird beim Ausschub ein Herausfallen der in der Aufnahmeeinrichtung verbleibenden Flächengebilde vermieden.

Die Länge des Schlittens kann auch etwas kürzer sein.

Weiterhin enthält der Transportschlitten mindestens auf dem oder den abfallenden Seitenbereichen (vorzugsweise jedoch auch auf dem Mittelbereich) Öffnungen, die mit einer Vakuum- oder Ansaugvorrichtung verbunden sind. Hierfür können beliebige Vakuumerzeugersysteme verwendet werden, beispielsweise eine Wasserstrahlpumpe. Vorzugsweise ist die Vakuum- oder Unterdruckquelle über Mehrkanalsysteme, wie ein Zwei- oder Dreikanalsystem, mit den Öffnungen in der Transportschlittenoberfläche verbunden, wobei beispielsweise ein Ansaugkanal im Mittelbereich des Schlittens und der oder die weiteren Ansaugkanäle in dem oder den Seitenbereichen münden. Die einzelnen Ansaugkanäle können in einer oder mehreren Bohrungen bzw. Öffnungen in der Oberfläche des Transportschlittens enden. Dies hat den Vorteil, daß das unterste Flächengebilde sicher auf der Oberfläche des Transportschlittens festgehalten wird. Vorzugsweise kann das Vakuum in den einzelnen Kanälen gesteuert werden.

Durch Saugluftbeaufschlagung, d.h. durch Einschalten des Vakuumsystems, wird das unterste Flächengebilde angesaugt und auf der Auflagefläche des Transportschlittens fixiert. Bei dieser Fixierung nimmt das Flächengebilde, entgegen seiner durch Eigenstabilität bedingten flachen und starren Lage, die Kontur der Schlittenform an. Dadurch wird neben der Fixierung auch eine Trennung des untersten Flächengebildes von dem nächsten Flächengebilde bewirkt.

Das stabilisierte und vereinzelte Flächengebilde wird dann ausgeschoben, wobei es am Ende des Transporthubes durch eine Saugluftsteuerung von dem Vakuumfeld gelöst und dann seiner weiteren Verwendung zugeführt wird. Der Transporthub kann ungefähr der Länge des Flächengebildes entsprechen. Es ist jedoch bevorzugt, daß sich der Transportschlitten nur eine geringe Strecke (d.h. eine Strecke, die kürzer als die Länge des Flächengebildes und z.B. 20-30 mm lang ist) bewegt, so daß die Vorderkante des vereinzelten Flächengebildes etwas vorsteht und von einer weiteren Transporteinrichtung (z.B. Rollen) übernommen werden kann.

Die erfindungsgemäße Vorrichtung weist einen Abstreifer auf, der die endgültige Trennung des untersten Flächengebildes von dem Rest des Flächengebildestapels weiter erleichtert. Dieser Abstreifer kann entweder ein eigenständiges Element der Vorrichtung oder Teil der Aufnahmeeinrichtung sein. Beispielsweise kann der Abstreifer die Vorderseite der Aufnahmeeinrichtung sein. Der Abstreifer sollte mindestens bis zur Unterkante des zweituntersten Flächengebildes bzw. bis zum Niveau des Mittelbereichs des Transportschlittens reichen, so daß nach der Fixierung des untersten Flächengebildes der gleichzeitige Ausschub eines weiteren Flächengebildes auf Grund von Adhäsion zwischen den beiden untersten Lagen trotz der bereits erfolgten Trennung der Randbereiche vermieden wird.

Vorzugsweise reicht der Abstreifer jedoch im Bereich des oder der abfallenden Transportschlittenseitenbereiche bis unter die Unterkante des Flächengebildestapels. Optimal ist ein Abstand zwischen Oberfläche des Seitenbereichs und Unterkante des Abstreifers der geringfügig größer ist als die Dicke des Flächengebildes. Eine genaue Einstellung des Abstreifers ist nicht notwendig, da bereits durch die Vakuumfixierung eine Trennung erfolgt ist und zudem der Abstand zwischen der Oberkante des untersten, fixierten Flächengebildes und der Unterkante des nächsten Flächengebildes im Bereich der abfallenden Seitenbereiche relativ groß ist. Ferner hängt der Einstellbereich von dem jeweils im Einzelfall gewählten Grad der Absenkung des oder der Seitenbereiche ab. Der Abstreifer kann einteilig, beispielsweise U-förmig, sein, wobei gegebenenfalls die unteren Enden des U-förmigen Abstreifers angeschrägt sind. Der Abstreifer kann jedoch auch aus zwei separaten Teilen bestehen, wobei wiederum die unteren Enden angeschrägt sein können.

Die erfindungsgemäße Vorrichtung eignet sich besonders zur Vereinzelung von Papierzuschnitten bei der Verpackung von Zigaretten.

Die Erfindung wird im weiteren anhand eines Ausführungsbeispieles erläutert. Es zeigen:
Fig. 1 eine Vereinzelungsvorrichtung von vorne (senkrecht zur Transportrichtung),
Fig. 2 die Vorrichtung von Fig. 1, wobei jedoch nun das unterste Flächengebilde angesaugt und fixiert ist, und
Fig. 3 eine Vorrichtung in Seitenansicht (parallel zur Transportrichtung).

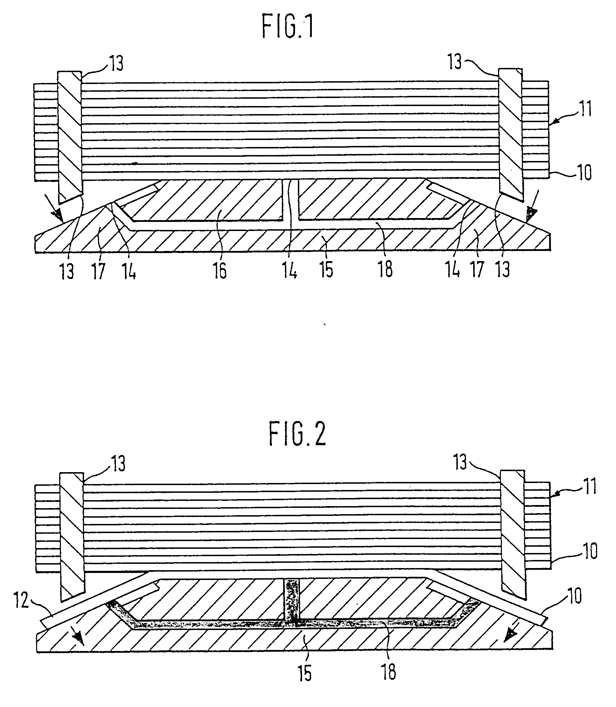

Fig. 1 zeigt einen Flächengebildestapel 11, der auf einem Transportschlitten 15 aufliegt. Der Transportschlitten 15 ist in bekannter Weise auf Schienen oder einer sonstigen Führungseinrichtung linear verschieblich gelagert und wird durch eine nicht gezeigte Antriebseinrichtung im Takt mit einer nachgeordneten Anlage, die die vereinzelten Flächengebilde 10 weiterverwendet, angetrieben. Die Bewegungsbahn des Transportschlittens 15 ist mit einem Winkel von etwa 30° nach unten geneigt. Der Flächengebildestapel 11 ist in einer Aufnahmeeinrichtung über dem Transportschlitten 15 gehalten. Die Aufnahmeeinrichtung ist in gleicher Weise wie die Bahn des Transportschlittens 15 nach vorne geneigt, so daß der Flächengebildestapel 11 durch sein Eigengewicht gegen einen Abstreifer 13 an der Vorderseite der Aufnahmeeinrichtung anliegt. Der Abstreifer 13 ist gleichzeitig die Vorderseite der Aufnahmeeinrichtung und wird durch zwei Stäbe gebildet, deren untere Enden bis unter die Unterkante des Flächengebildestapels 11 vorstehen. Die beiden Stäbe des Abstreifers 13 sind senkrecht zur Bewegungsrichtung des Transportschlittens 15 angeordnet.

Die Oberseite des Transportschlittens 15 weist einen ebenen, in Transportrichtung verlaufenden Mittelbereich 16 und zwei Seitenbereiche 17 auf, die vom Mittelbereich 16 zur Seite hin abfallen. Im Mittelbereich 16 und in den Seitenbereichen 17 sind Vakuum- bzw. Ansaugöffnungen 14 vorgesehen, durch die über ein im einzelnen nicht dargestelltes Dreikanalvakuumsystem 18 und eine nicht gezeigte Unterdruckquelle Unterdruck angelegt werden kann.

Die Stäbe des Abstreifers 13 befinden sich über den Seitenbereichen 17 und die unteren Enden der Stäbe sind parallel zu den Seitenbereichen 17 abgeschnitten.

Wie aus Fig. 2 ersichtlich ist, wird durch Einschalten des Vakuumsystems (in Fig. 2 durch Verdunkelung des Dreikanalvakuumsystems 18 dargestellt) das unterste Flächengebilde 10 angesaugt. Dadurch werden beide Randbereiche 12 des untersten Flächengebildes 10 um in Abziehrichtung verlaufende Linien abgeknickt, und das unterste Flächengebilde 10 wird gezwungen, seine ursprünglich starre und gerade Form dem abgeknickten Querschnitt des Transportschlittens 15 anzupassen. Hierdurch erfolgt in den Seitenbereichen 17 eine Trennung von dem nächsten Flächengebilde 10. Beim Vorschub des Transportschlittens 15 wird das unterste Flächengebilde 10 mitgenommen, da es durch den über das Vakuumsystem erzeugten Unterdruck vom Transportschlitten 15 festgehalten wird. Das darüberliegende Flächengebilde liegt mit seiner Vorderkante an dem Abstreifer 13 an und kann dadurch die Bewegung des Transportschlittens 15 nicht mitmachen, so daß durch den Vorschub des Transportschlittens 15 und den dadurch erzeugten Ausschub des untersten Flächengebildes 10 unter dem Abstreifer 13 hindurch eine zuverlässige Vereinzelung des untersten Flächengebildes 10 erfolgt. Wie Fig. 2 weiter zeigt, ist es nicht notwendig, den Abstreifer 13 sehr genau einzustellen, da durch das Vakuumsystem nur das unterste Flächengebilde 10 abgetrennt werden kann. Die Mitnahme des darauffolgenden Flächengebildes wird zuverlässig verhindert.

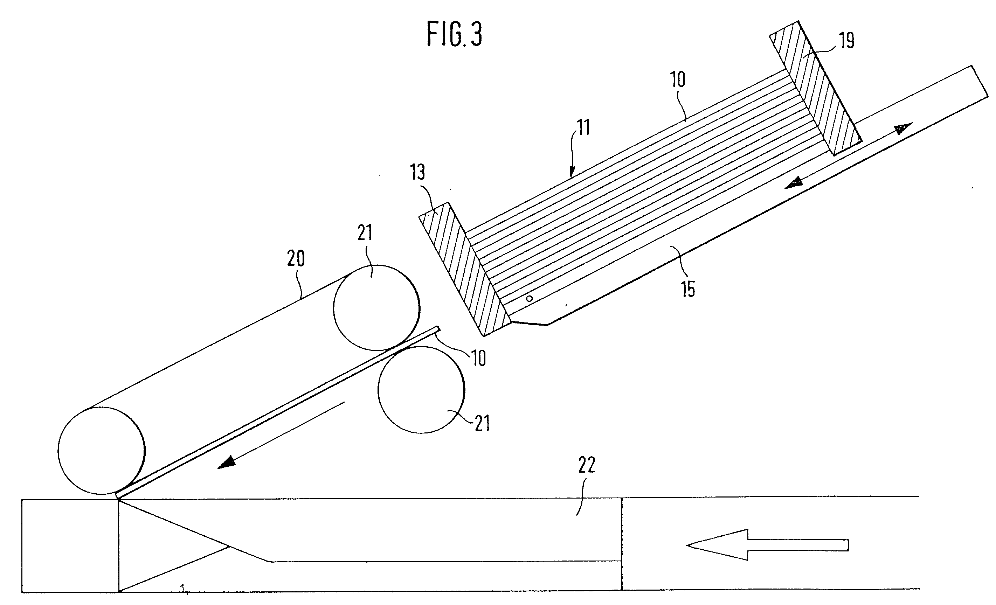

Fig. 3 zeigt wiederum den Flächengebildestapel 11 mit mehreren Flächengebilden 10 sowie den Abstreifer 13 und einen Gegenhalter 19, der gegen das hintere Ende des Flächengebildestapels 11 drückt. Der Transportschlitten 15 kann vor- und zurückfahren, wie durch den Doppelpfeil in Fig. 3 angezeigt. Das unter dem Abstreifer 13 hindurch ausgeschobene Flächengebilde 10 (ein Kupon) wird, nachdem das Vakuumsystem abgeschaltet ist, an ein Transportband 20 übergeben, das es zu einer Zigarettenschachtel 22 weiter befördert.

Um eine zuverlässige Übergabe des Flächengebildes 10 an die Eingangswalzen 21 des Transportbandes 20 zu erreichen, ist die Vorderkantenunterseite des Transportschlittens 15 angeschrägt.

## Patentansprüche

1. Vorrichtung zur Vereinzelung gestapelter Flächengebilde mit einer Aufnahmeeinrichtung für einen Flächengebildestapel (11) und mit einer Transporteinrichtung für die vereinzelten Flächengebilde (10), wobei ein in die Aufnahmeeinrichtung eingelegter Flächengebildestapel (11) auf der Transporteinrichtung aufliegt und die Transporteinrichtung Öffnungen (14) aufweist, die mit einer Einrichtung zur Erzeugung von Unterdruck verbindbar sind, und wobei die Transporteinrichtung ein Transportschlitten (15) mit einem ebenen Mittelbereich (16) und parallel zur Transportrichtung verlaufenden Seitenbereichen (17) ist, wobei mindestens einer der Seitenbereiche (17) nach unten abfällt und dieser nach unten abfallende Seitenbereich (17) mindestens eine dieser vorgenannten Öffnungen (14) aufweist, die mit der Einrichtung zur Erzeugung von Unterdruck verbindbar ist, und wobei die Vorrichtung weiterhin einen Abstreifer (13) aufweist,
**dadurch gekennzeichnet**, daß
die Länge des Transportschlittens (15) so bemessen ist, daß die Vorderkante des Transportschlittens (15), wenn dieser sich in einer, bezüglich der Transportrichtung, zurückgezogenen Position befindet, nicht ganz bis zur Hinterkante der Vorderwand der Aufnahmeeinrichtung reicht, so daß ein auf dem Transportschlitten (15) fixiertes Flächengebilde (10) etwas über die Vorderkante des Transportschlittens (15) übersteht.

2. Vorrichtung nach Anspruch 1, dadurch gekennzeichnet, daß die Länge des Transportschlittens (15) so bemessen ist, daß die Vorderkante des Transportschlittens (15), wenn dieser sich in einer, bezüglich der Transportrichtung, zurückgezogenen Position befindet, nicht ganz bis zur Hinterkante der Vorderwand der Aufnahmeeinrichtung reicht, so daß ein auf dem Transportschlitten (15) fixiertes Flächengebilde (10) um 0,5 bis 3,0 mm über die Vorderkante des Transportschlittens (15) übersteht.

3. Vorrichtung nach Anspruch 1 oder 2, dadurch gekennzeichnet, daß beide Seitenbereiche (17) des Transportschlittens (15) nach unten abfallen und jeweils mindestens eine Öffnung (14) aufweisen, die mit einer Einrichtung zur Erzeugung von Unterdruck verbindbar ist.

4. Vorrichtung nach Anspruch 1 bis 3, dadurch gekennzeichnet, daß das untere Ende des Abstreifers (13) im Bereich des oder der abfallenden Seitenbereiche (17) tiefer liegt als der Mittelbereich (16).

5. Vorrichtung nach einem der Ansprüche 1 bis 4, dadurch gekennzeichnet, daß der oder die abfallenden Seitenbereiche (17) abgeknickt oder abgerundet sind.

6. Vorrichtung nach einem der Ansprüche 1 bis 5, dadurch gekennzeichnet, daß der Transportschlitten (15) nach vorne geneigt ist.

7. Verwendung der Vorrichtung nach einem der Ansprüche 1 bis 6 zur Vereinzelung von Papierzuschnitten bei der Verpackung von Zigaretten.

## Claims

1. Apparatus for separating stacked sheet structures comprising a receiver device for a stack (11) of sheet structures and a transPort device for the separated sheet structures (10), and a stack (11) of sheet structures laid in the receiver device rests on the transport device and the transport device has openings (14) which can be connected to a device for generating negative pressure, and the transport device being a transport slide (15) with a flat central area (16) and side areas (17) running parallel to the transport direction, at least one of the side areas (17) sloping downward and this downward sloping side area (17) having at least one of these aforementioned openings (14) which can be connected to a device for generating negative pressure, and the device further having a stripper (13),
**characterized in** that
the length of the transport slide (15) is dimensioned such that the front edge of the transport slide (15), when said slide is in a retracted position with respect to the transport direction, does not extend all the way to the rear edge of the front wall of the receiver device so that a sheet structure (10) held on the transport slide (15) projects somewhat beyond the forward edge of the transport slide (15).

2. Apparatus according to claim 1, characterized in that the length of the transport slide (15) is dimensioned such that the front edge of the transport slide (15), when said slide is in a retracted position with respect to the transport direction, does not extend all the way to the rear edge of the front wall of the receiver device so that a sheet structure (10) held on the transport slide (15) projects O.5 to 3.0 mm beyond the forward edge of the transport slide (15).

3. Apparatus according to claims 1 or 2, characterized in that both side areas (17) of the transport slide (15) slope downward and each has at least one opening (14) which can be connected to a device for generating negative pressure.

4. Apparatus according to claims 1 to 3, characterized in that the lower end of the stripper (13) is lower in the area of the sloping side area or areas (17) than in the central area (16).

5. Apparatus according to one of claims 1 to 4, characterized in that the sloping side area or areas (17) are bent over or rounded off.

6. Apparatus according to one of claims 1 to 5, characterized in that the transport slide (15) is inclined to the front.

7. Use of the apparatus according to one of claims 1 to 6 for separating cut paper blanks when packaging cigarettes.

## Revendications

1. Dispositif pour séparer des structures planes empilées, comprenant un dispositif récepteur pour une pile (11) de structures planes et un dispositif transporteur pour les structures planes (10) séparées, une pile (11) de structures planes introduite dans le dispositif récepteur reposant sur le dispositif transporteur et le dispositif transporteur comportant des ouvertures (14) qui peuvent être reliées à un dispositif générateur de dépression, et le dispositif transporteur étant un chariot de transport (15) comportant une région centrale plane (16) et des régions latérales (17) s'étendant parallèlement à la direction de transport, au moins une des régions latérales (17) étant à pente descendante et cette région latérale (17) à pente descendante comportant au moins une des ouvertures précitées (14), qui peut être reliée au dispositif générateur de dépression, et le dispositif comprenant en outre un racleur (13),
caractérisé en ce que la longueur du chariot de transport (15) est dimensionnée de telle sorte que le bord avant du chariot de transport (15), lorsque ce dernier se trouve dans une position ramenée en arrière par rapport à la direction de transport, ne s'étend pas jusqu'au bord arrière de la paroi avant du dispositif récepteur, de sorte qu'une structure plane (10) fixée en position sur le chariot de transport (15) dépasse légèrement du bord avant du chariot de transport (15).

2. Dispositif selon la revendication 1, caractérisé en ce que la longueur du chariot de transport (15) est dimensionnée de telle sorte que le bord avant du chariot de transport (15), lorsque ce dernier se trouve dans une position ramenée en arrière par rapport à la direction de transport, ne s'étend pas jusqu'au bord arrière de la paroi avant du dispositif récepteur, de sorte qu'une structure plane (10) fixée en position sur le chariot de transport (15) dépasse de 0,5 à 3,0 mm du bord avant du chariot de transport (15).

3. Dispositif selon la revendication 1 ou 2, caractérisé en ce que les deux régions latérales (17) du chariot de transport (15) sont à pente descendante et comportent chacune au moins une ouverture (14) qui peut être reliée à un dispositif générateur de dépression.

4. Dispositif selon l'une des revendications 1 à 3, caractérisé en ce que l'extrémité inférieure du racleur (13) se trouve plus bas dans la région de la ou des régions latérales (17) à pente descendante que la région centrale (16).

5. Dispositif selon l'une des revendications 1 à 4, caractérisé en ce que la ou les régions latérales (17) à pente descendante sont infléchies ou arrondies.

6. Dispositif selon l'une des revendications 1 à 5, caractérisé en ce que le chariot de transport (15) est incliné vers l'avant.

7. Utilisation du dispositif selon l'une des revendications 1 à 6 pour séparer des pièces découpées de papier lors de l'emballage de cigarettes.
